# EUROPEAN PATENT SPECIFICATION

(11) **EP 1 419 906 B1**
(45) Date of publication and mention of the grant of the patent: **23.11.2005**
(21) Application number: 03023611.1
(22) Date of filing: 16.10.2003
(51) Int. Cl.: B60C 23/04

(54) **Transmitting method of transmitter and processing method of receiver**
Übertragungsverfahren für einen Sender und Verarbeitungsverfahren für einen Empfänger
Méthode de transmission pour un émetteur et méthode de traitement pour un récepteur

(30) Priority: 18.11.2002 JP 2002333757
(43) Date of publication of application: 19.05.2004
(73) Proprietor: Pacific Industrial Co., Ltd., Ogaki-shi, Gifu-ken 503-8603 (JP)
(72) Inventor: Okubo, Youichi, Ogaki-shi, Gifu-ken 503-8603 (JP); Takagi, Satoshi, Ogaki-shi, Gifu-ken 503-8603 (JP)
(74) Representative: Breit, Ulrich

(56) References cited:
- EP-A- 0 671 289

## Description

The present invention relates to a transmitting method for a transmitter according to the preamble of claim 1 or 2. Such transmitters are useful in a vehicle having a wireless tire condition monitoring system and at least one wireless apparatus control system such as a keyless entry system. That transmitter can wirelessly transmit data for controlling parts of a vehicle or can wirelessly transmit data from a transmitter located in each tire. The present invention also pertains to a processing method for a receiver according to the preamble of claim 3 that receives data transmitted using the above transmitting method, and processes the data. The present invention also pertains to a data transmission system of a vehicle having a wireless tire condition monitoring system and at least one wireless apparatus control system.

EP-A-0 671 289 discloses methods of the mentioned type. Japanese Laid-Open Patent Publication No. 6-26255 discloses a keyless entry system that wirelessly controls a door lock. Japanese Laid-Open Patent Publication No. 10-104103 discloses a wireless tire condition monitoring apparatus that allows a drivers in a vehicle passenger compartment to check the conditions of vehicle tires.

However, a keyless entry system and a tire condition monitoring apparatus each have a dedicated transmitter and a dedicated receiver. Each receiver receives data that is wirelessly transmitted from the corresponding transmitter, and executes a process corresponding to the received data. That is, the data format and the frequency of the keyless entry system differ from those of the tire condition monitoring apparatus. Therefore, separate receivers are required,

Accordingly, it is a first objective of the present invention to provide a transmitting method of a transmitter that permits a receiver to determine the type of the transmitter that is a source of a received data.

A second objective of the present invention is to provide a processing method of a receiver that appropriately processes data transmitted from the transmitter.

To achieve the first objective, the invention provides a transmitting method according to claims 1 and 2 for a transmitter useful in a vehicle having at least one wireless apparatus control system and a wireless tire condition monitoring system. The transmitting method includes wirelessly transmitting data using a data format. The same data format can be used in the wireless apparatus control system to control at least one apparatus of a vehicle and in the wireless tire condition monitoring system to show a tire condition. The data format includes data showing the type of transmitter used. To achieve the second objective, the invention provides a processing method according to claim 3.

Other aspects so and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments, together with the accompanying drawings, in which:
Fig. 1 is a schematic diagram illustrating a tire condition monitoring apparatus and a keyless entry system;
Fig. 2 is a block diagram illustrating a transmitter of the tire condition monitoring apparatus;
Fig. 3 is an explanatory diagram illustrating a data format;
Fig. 4 is a block diagram illustrating a receiver of the tire condition monitoring apparatus;
Fig. 5 is a flowchart showing an operation of the receiver; and
Fig. 6 is a flowchart showing a process performed upon receipt of data that shows the tire condition.

A transmitting method of a transmitter and a processing method of a receiver according to a preferred embodiment of the present invention will now be described with reference to drawings.

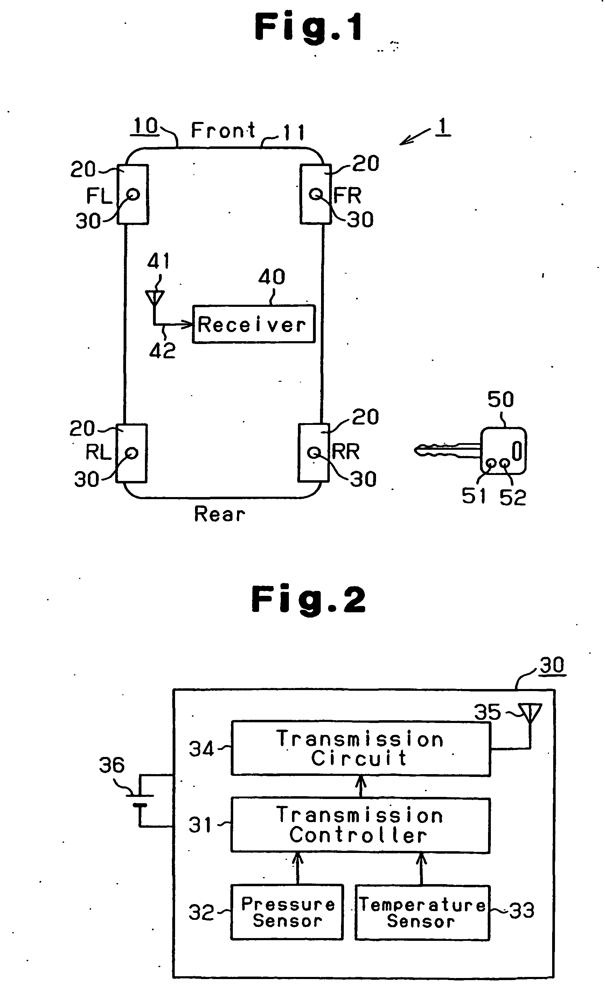

As shown in Fig. 1, a vehicle 10 has tires 20 of left and right front wheels (FL, FR) and tires 20 of left and right rear wheels (RL, RR). A tire condition monitoring apparatus 1 includes four transmitters 30 and a receiver 40. Each transmitter 30 is located in one of the tires 20 of the vehicle 10. The receiver 40 is located on a body frame 11 of the vehicle 10.

Each transmitter 30 is located in the corresponding tire 20 and is fixed, for example, to the wheel of the tire 20. Each transmitter 30 measures the condition of the corresponding tire 20; that is, the air pressure and the temperature of the tire 20. The transmitter 30 then wirelessly transmits data containing the air pressure data and the temperature data.

The receiver 40 is located at a predetermined position on the body frame 11 and is activated by electricity of a battery (not shown) of the vehicle 10. The receiver 40 includes a single reception antenna 41. The reception antenna 41 is connected to the receiver 40 with a cable 42. The receiver 40 receives data wirelessly transmitted by the transmitters 30 through the reception antenna 41.

A transmitter 50 of the keyless entry system includes a lock switch 51 for locking a door of the body frame 11 and an unlock switch 52 for unlocking the door. The transmitter 50 wirelessly transmits data to the receiver 40 in accordance with pressing of the lock switch 51 and the unlock switch 52. The receiver 40 receives the data that is wirelessly transmitted from the transmitter 50 of the keyless entry system via the reception antenna 41.

As shown in Fig. 2, each transmitter 30 includes a transmission controller 31, which is a microcomputer. The transmission controller 31 includes, for example, a central processing unit (CPU), a read only memory (ROM), and a random access memory (RAM). A unique ID code is registered in an internal memory, for example, the ROM, of the transmission controller 31. The ID code is used to distinguish the associated transmitter 30 from the other three transmitters 30. Each transmitter 30 further includes a pressure sensor 32, a temperature sensor 33, a transmission circuit 34, and a transmission antenna 35.

The pressure sensor 32 measures the air pressure in the interior of the tire 20 associated with the transmitter 30, and provides pressure data obtained from that air pressure measurement to the transmission controller 31. The temperature sensor 33 measures the temperature in the interior of the tire 20 associated with the transmitter 30, and provides temperature data obtained from that temperature measurement to the transmission controller 31.

The transmission controller 31 sends the air pressure data, the temperature data, and the registered ID code to the associated transmission circuit 34. The transmission circuit 34 encodes and modulates the data sent from the transmission controller 31, then wirelessly sends the data to the receiver 40 through the transmission antenna 35. Each transmitter 30 is provided with a battery 36 that provides electricity to drive the transmitter 30.

The transmission controller 31 in each transmitter 30 controls the associated pressure sensor 32 and temperature sensor 33 to perform measurements at predetermined time intervals (for example, every 15 seconds). The transmission controller 31 also controls the transmission circuit 34 to perform periodic transmission every time the pressure sensor 32 completes a predetermined number (e.g., 40) of measurements. Further, the transmission controller 31 causes the transmission circuit 34 to perform transmission, irrespective of timing of the periodic transmission, when an abnormality is detected in the air pressure or the temperature in the tire 20.

The timing of transmission of the transmitters 30 is regulated such that each transmitter 30 performs transmission at a timing that is different from those of the other transmitters 30. Therefore, two or more of the transmitters 30 do not perform transmission simultaneously.

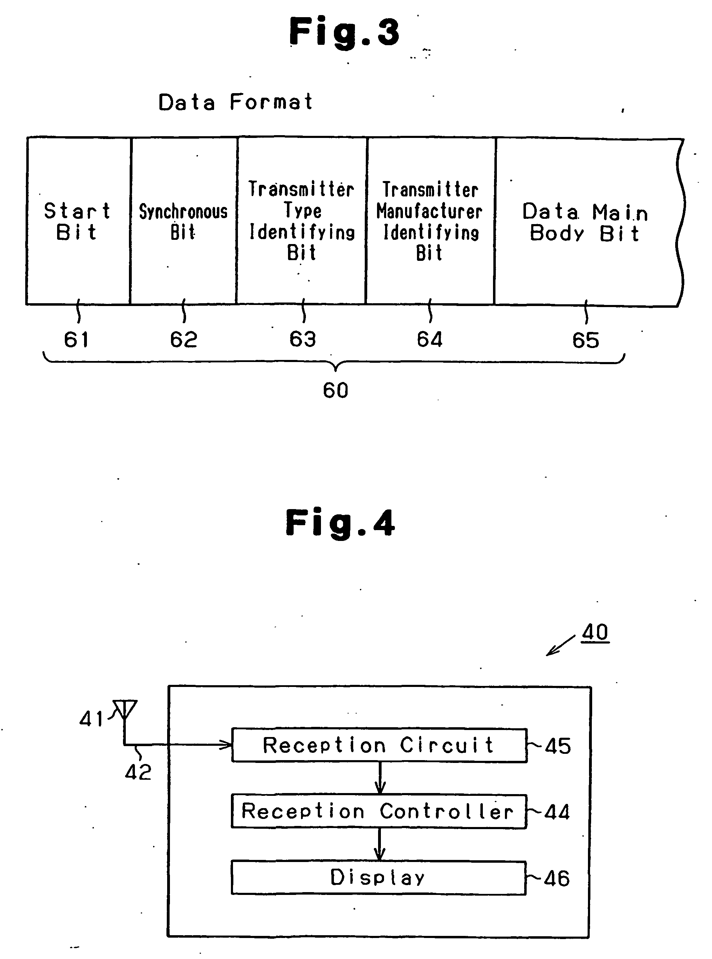

As shown in Fig. 3, a data format 60 for wirelessly transmitting data from each of the transmitters 30 and the transmitter 50 is formed of a start bit 61, a synchronous bit 62, a transmitter type identifying bit 63, a transmitter manufacturer identifying bit 64, and a data main body bit 65. The start bit 61 is a marking to indicate the beginning of a series of data. The synchronous bit 62, which follows the start bit 61, is used to regulate the timing between the transmitters 30, 50 and the receiver 40. Data used for identifying types of the transmitters 30, 50 is stored in the transmitter type identifying bit 63, which follows the synchronous bit 62. Data used for identifying the manufacturer of the transmitters 30 is stored in the transmitter manufacturer identifying bit 64, which follows the transmitter type identifying bit 63. That is, data that is unique to each manufacturer of different transmitters 30 is stored in the transmitter manufacturer identifying bit 64. The main body of the data is stored in the data main body bit 65, which follows the transmitter manufacturer identifying bit 64. For example, data that indicates the tire condition transmitted from the transmitter 30 or data for controlling the door lock transmitted from the transmitter 50 is stored in the data main body bit 65.

The transmitters 30 and the transmitter 50 wirelessly transmit data to the receiver 40 using the data format 60 having the same frequency (for example, 315[MHz]), the same communication speed (for example, 5[kbps]), and the same modulation method (for example, frequency shift keying (FSK)). Therefore, the receiver 40 receives data that is wirelessly transmitted by the transmitters 30 and the transmitter 50.

As shown in Fig. 4, the receiver 40 includes a reception controller 44, a reception circuit 45, and a display 46. The reception controller 44 processes data received with the reception antenna 41. The reception controller 44, which is, for example, a microcomputer, includes a CPU, a ROM, and a RAM.

The reception circuit 45 receives data transmitted by the transmitters 30 and the transmitter 50 through the reception antenna 41. The reception circuit 45 demodulates and decodes the received data, and sends the data to the reception controller 44.

The reception controller 44 determines whether the data received through the reception antenna 41 is the data transmitted from the transmitter 30 located in one of the tires 20 or is the data transmitted from the transmitter 50.

When the received data is determined to be transmitted from a transmitter 30, based on the received data, the reception controller 44 obtains the air pressure and the temperature of the tire 20 that is associated with the transmitter 30 that is the source of the received data. The reception controller 44 displays on the display 46 the data regarding the internal pressure and the internal temperature of the tire 20 that is associated with the transmitter 30 that is the source of the received data. Particularly, when there is an abnormality in the air pressure of the tire 20, the reception controller 44 displays warning on the display 46.

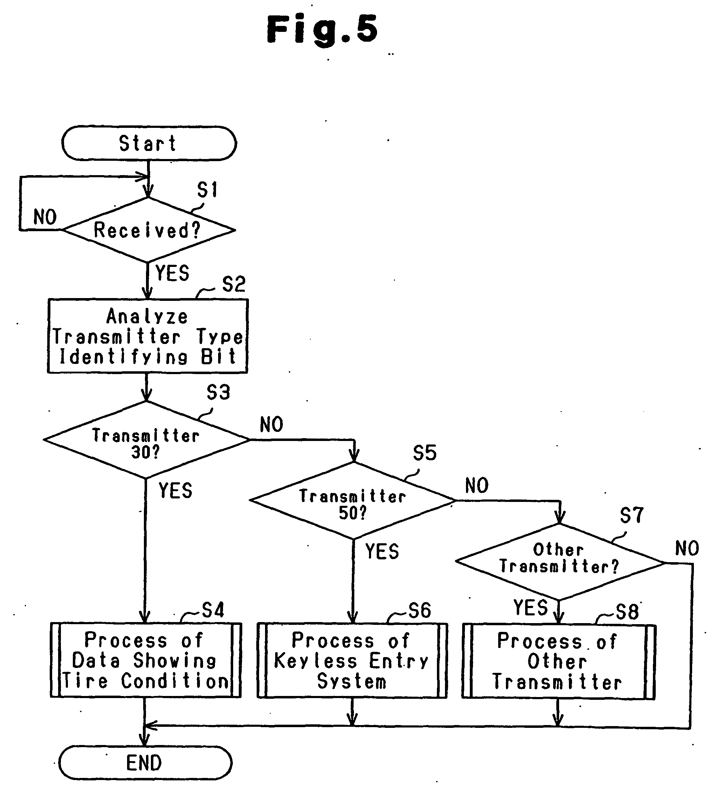

The operation of the receiver 40 will now be described with reference to the flowchart of Fig. 5.

As shown in Fig. 5, if the decision outcome of step S1 is positive, that is, when the data having the above mentioned data format 60 is received, the reception controller 44 proceeds to step S2. In step S2, the reception controller 44 analyzes the transmitter type identifying bit 63. That is, the reception controller 44 determines whether the source of the received data is one of the transmitters 30 or the transmitter 50, based on the data stored in the transmitter type identifying bit 63. As a result, if the decision outcome of step S3 is positive, that is, if it is determined that the source of the received data is one of the transmitters 30, the reception controller 44 determines that the data stored in the data main body bit 65 shows the tire condition, and executes a process in step S4. For example, the reception controller 44 controls the display 46 to indicate the data showing the tire condition.

On the other hand, if the decision outcome of step S5 is positive; that is, if it is determined that the source of the received data is the transmitter 50, the reception controller 44 determines that the data stored in the data main body bit 65 is the data of the keyless entry system, and executes a process in step S6. For example, the reception controller 44 executes a process of the keyless entry system; that is, locks or unlocks the door, based on the data for controlling the door lock.

If the decision outcome of steps S3 and S5 are negative; that is, if it is determined that the source of the received data is neither the transmitters 30 nor the transmitter 50, the reception controller 44 proceeds to step S7. In step S7, the reception controller 44 determines whether the source of the received data is a transmitter of some other system, such as a wireless engine start system. If it is determined that the source of the received data is a transmitter of the other system, the reception controller 44 executes a process corresponding to that system in step S8. If the decision outcome of steps S3, S5, and S7 are negative, that is, if it is determined that the source of the received data is none of the transmitters 30, 50 and a transmitter of the other system, the reception controller 44 terminates the routine.

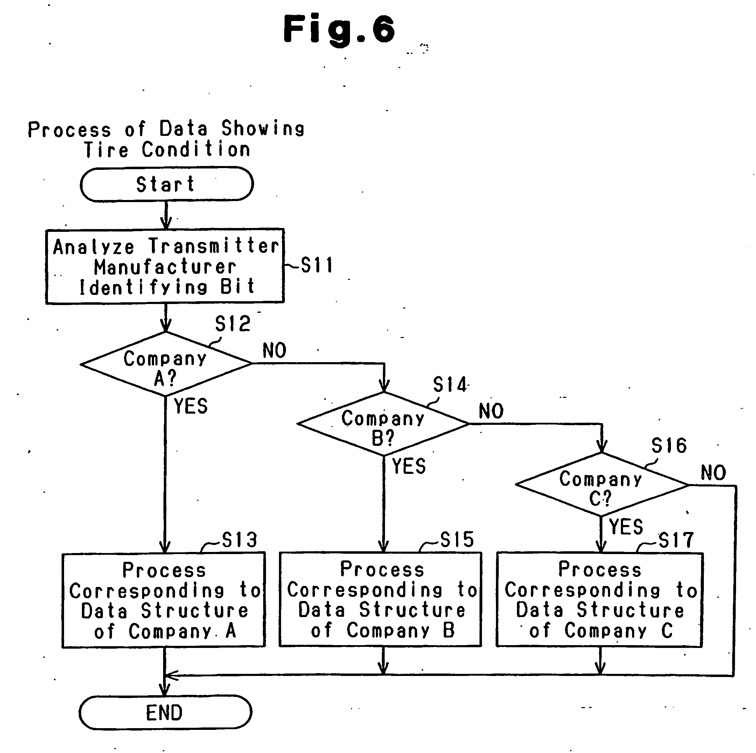

A routine performed upon receipt of the data showing the tire condition (step S4 shown in Fig. 5) will now be described with reference to a flowchart of Fig. 6.

As shown in Fig. 6, in step S11, the reception controller 44 analyzes the transmitter manufacturer identifying bit 64, and proceeds to step S12. In step S12, if it is determined that the transmitter 30 is made by a company A, the reception controller 44 proceeds to step S13. In step S13, since the data stored in the data main body bit 65 has a data structure specific to the company A, the reception controller 44 executes a process corresponding to the data structure of the company A. For example, the reception controller 44 extracts only the data showing the tire condition from the data structure, and indicates the data on the display 46.

In step S12, if it is determined that the transmitter 30 is not made by a company A, the reception controller 44 proceeds to step S14. If it is determined that the source of the received data is a transmitter 30 of a company B in step S14, the reception controller 44 proceeds to step S15. In step S15, since the data stored in the data main body bit 65 has a data structure specific to the company B, the reception controller 44 executes a process corresponding to the data structure of the company B.

In step S14, if it is determined that the transmitter 30 is not made by a company B, the reception controller 44 proceeds to step S16. If it is determined that the source of the received data is a transmitter 30 of a company C in step S16, the reception controller 44 proceeds to step S17. In step S17, since the data stored in the data main body bit 65 has a data structure specific to the company C, the reception controller 44 executes a process corresponding to the data structure of the company C.

If the decision outcome of steps S12, S14, and S16 are all negative, that is, if it is determined that the source of the received data is none of transmitters of the companies A, B, and C, the reception controller 44 terminates the routine.

This embodiment has the following advantages.
(1) The data format 60 includes the transmitter type identifying bit 63, which stores data for identifying the type of the transmitter. The transmitter type identifying bit 63 stores data indicating either the transmitter 30, which wirelessly transmits data showing the tire condition, or the transmitter 50 for the keyless entry system. Therefore, the receiver 40 determines whether the data is wirelessly transmitted from the transmitters 30 or the transmitter 50 by analyzing the transmitter type identifying bit 63. Thus, the receiver 40 determines the type of the transmitter 30 or 50 that is the source of the received data.
(2) The data format 60 includes the transmitter manufacturer identifying bit 64, which stores data for identifying the manufacturer of the transmitter 30. Therefore, the receiver 40 determines the manufacturer of the transmitter 30 that is the source of the received data based on the data stored in the transmitter manufacturer identifying bit 64. Thus, the receiver 40 determines the manufacture of the transmitter 30 that is the source of the received data.
(3) In addition, although the data stored in the data main body bit 65 has the data structure specific to the transmitter 30 of the manufacturer, the receiver 40 extracts only the necessary data, such as the data showing the tire condition. As a result, the receiver 40 receives data from the transmitters 30 regardless of the manufacturer of the transmitters 30. Therefore, the receiver 40 appropriately processes the data transmitted from the transmitters 30.
(4) The receiver 40 receives both the data showing the tire condition wirelessly transmitted from the transmitters 30 and the control data for the keyless entry system wirelessly transmitted from the transmitter 50. Therefore, separate receivers need not be provided. As a result, the space for arranging the receiver 40 is reduced, and the cost for the receiver 40 is reduced. Further, since the same frequency is used, the frequency is effectively used.

The above embodiment may be modified as follows.

It should be apparent to those skilled in the art that the present invention may be embodied in many other specific forms without departing from the scope the invention as defined in the appended claims. Particularly, it should understood that the invention may be embodied in the following forms.

The content of the data stored in the data main body bit 65 may be stored in the transmitter type identifying bit 63. For example, when the data showing the tire condition is stored in the data main body bit 65, data that indicates that the data showing the tire condition is stored in the data main body bit 65 is stored in the transmitter type identifying bit 63. When the control data for the keyless entry system is stored in the data main body bit 65, data that indicates that the control data of the keyless entry system is stored in the data main body bit 65 is stored in the transmitter type identifying bit 63. With this structure also, the reception controller 44 is capable of determining from which of the transmitters 30, 50 has the data been wirelessly transmitted. Thus, the receiver 40 is capable of determining the type of the transmitter 30, 50 that is the source of the received data.

Data for identifying the manufacturer of the transmitter 50 of the keyless entry system may be stored in the transmitter manufacturer identifying bit 64. With this structure, the receiver 40 appropriately processes control data transmitted from the transmitter 50 regardless of the manufacturer of the transmitter 50.

Data for controlling parts of the vehicle need not be the control data of the keyless entry system, but may be control data for a wireless engine start system or a control data for opening a trunk by wirelessly unlocking the trunk. The keyless entry system, the wireless engine start system, and the wireless trunk opening and closing system correspond to several apparatuses of the vehicle.

When there is an abnormality in the air pressure or the temperature of the tire 20, the abnormality may be indicated by a sound. In addition, a speaker that is mounted on the vehicle 10 in advance may be used as an informing device.

The temperature sensor 33 may be omitted. In this case, the transmitter 30 has the minimum functions. This reduces the cost.

Air pressure data transmitted by the transmitter 30 may indicate the value of the air pressure or whether the air pressure is within a permissible range.

Other than four-wheeled vehicles, the present invention may be applied to two-wheeled vehicles, such as bicycles and motor cycles; multi-wheeled busses; multi-wheeled towed vehicles; and industrial vehicles, such as forklifts. When the present invention is applied to a towed vehicle, the receiver 40 and the display 46 are provided in the tractor.

The present examples and embodiments are to be considered as illustrative and are not restrictive, and the invention is not to be limited to the details given herein, but may be modified within the scope and equivalence of the appended claims.

## Claims

1. A transmitting method of a transmitter, wherein
- a data format used to control several apparatuses of a vehicle and a data format showing a tire condition are identical;
- the data format includes data showing the type of the transmitter and
- data used to control the apparatuses of the vehicle or data showing the tire condition is wirelessly transmitted by the transmitter using the data format **characterized in that** the data format includes data showing a manufacturer of the transmitter.

2. A transmitting method of a transmitter, wherein
- a data format used to control several apparatuses of a vehicle and a data format showing a tire condition are identical,
- the data format includes data showing which of data used to control the apparatuses of the vehicle or data showing the tire condition is given, and
- data used to control the apparatuses of the vehicle or data showing the tire condition is wirelessly transmitted by the transmitter using the data format,
**characterized in that** the data format includes data showing a manufacturer of the transmitter.

3. A processing method of a receiver for receiving and processing data transmitted from a transmitter using the transmitting method according to claim 1 or 2, **characterized in that** the receiver determines the manufacturer of the transmitter that is a source of a received data based on data included in the received data showing the manufacturer of the associated transmitter, and executes a process corresponding to the determined manufacturer of the transmitter.

4. The processing method of claim 3, **characterized in that** the receiver determines the type of the transmitter that is a source of a received data based on data included in the received data showing the type of the transmitter used, and executes a process corresponding to the determined type of the transmitter.

5. The processing method of claim 3, **characterized in that** the receiver determines the type of the transmitter that is a source of a received data based on data showing which of the data used to control the apparatuses of the vehicle or the data showing a tire condition is given, and executes a process corresponding to the determined type of the transmitter.

## Patentansprüche

1. Übertragungsverfahren für einen Sender, bei dem
- ein zur Steuerung mehrerer Geräte eines Fahrzeugs verwendetes Datenformat und ein Datenformat, das einen Reifenzustand anzeigt, identisch sind;
- das Datenformat Daten enthält, die den Sendertyp anzeigen, und
- Daten, die zur Steuerung der Geräte des Fahrzeugs verwendet werden, oder Daten, die den Reifenzustand anzeigen, vom Sender unter Verwendung des Datenformates drahtlos übertragen werden,
**dadurch gekennzeichnet, daß** das Datenformat Daten enthält, die einen Hersteller des Senders anzeigen.

2. Übertragungsverfahren für einen Sender, bei dem
- ein zur Steuerung mehrerer Geräte eines Fahrzeugs verwendetes Datenformat und ein Datenformat, das einen Reifezustand darstellt, identisch sind;
- das Datenformat Daten enthält, die anzeigen, ob zur Steuerung der Geräte des Fahrzeugs verwendete Daten oder den Reifenzustand anzeigende Daten vorliegen, und
- Daten, die zur Steuerung der Geräte des Fahrzeugs verwendet werden, oder Daten, die den Reifenzustand anzeigen, vom Sender unter Verwendung des Datenformates drahtlos übertragen werden,
- **dadurch gekennzeichnet, daß** das Datenformat Daten enthält, die einen Hersteller des Senders anzeigen.

3. Verarbeitungsverfahren für einen Empfänger zum Empfangen und Verarbeiten von Daten, die von einem Sender unter Verwendung des Übertragungsverfahrens nach Anspruch 1 oder 2 übertragen wurden, **dadurch** gekennzeichet, daß der Empfänger den Hersteller des Senders, der Quelle der empfangenen Daten ist, anhand der in den empfangenen Daten enthaltenen Daten feststellt, welche den Hersteller des zugeordneten Senders anzeigen, und ein dem festgestellten Hersteller des Senders entsprechendes Verfahren ausführt.

4. Verarbeitungsverfahren nach Anspruch 3, **dadurch** gekennzeichet, daß der Empfänger den Sendertyp, der Quelle der empfangenen Daten ist, anhand von in den empfangenen Daten enthaltenen Daten feststellt, welche den verwendeten Sendertyp anzeigen, und ein dem festgestellten Sendertyp entsprechendes Verfahren ausführt.

5. Verarbeitungsverfahren nach Anspruch 3, **dadurch gekennzeichnet, daß** der Empfänger den Sendertyp, der Quelle der empfangenen Daten ist, anhand von Daten feststellt, die anzeigen, ob die zur Steuerung der Geräte des Fahrzeugs verwendeten Daten oder die einen Reifenzustand anzeigenden Daten vorliegen, und ein dem festgestellten Sendertyp entsprechendes Verfahren ausführt.

## Revendications

1. Procédé d'émission d'un émetteur, dans lequel
- un format de données utilisé pour commander plusieurs dispositifs d'un véhicule et un format de données indiquant une condition d'un pneu sont identiques ;
- le format de données comprend des données indiquant le type de l'émetteur ; et
- des données utilisées pour commander les dispositifs du véhicule ou des données indiquant la condition d'un pneu sont émises sans fil par l'émetteur en utilisant le format de données,
**caractérisé en ce que** le format de données comprend des données indiquant un fabricant de l'émetteur.

2. Procédé d'émission d'un émetteur, dans lequel
- un format de données utilisé pour commander plusieurs dispositifs d'un véhicule et un format de données indiquant une condition d'un pneu sont identiques ;
- le format de données comprend des données indiquant lesquelles des données utilisées pour commander les dispositifs du véhicule ou des données indiquant la condition d'un pneu sont données ; et
- des données utilisées pour commander les dispositifs du véhicule ou des données indiquant la condition d'un pneu sont émises sans fil par l'émetteur en utilisant le format de données,
**caractérisé en ce que** le format de données comprend des données indiquant un fabricant de l'émetteur.

3. Procédé de traitement d'un récepteur pour recevoir et traiter des données émises par un émetteur utilisant le procédé d'émission selon la revendication 1 ou 2, **caractérisé en ce que** le récepteur détermine le fabriquant de l'émetteur qui est une source de données reçues sur la base de données comprises dans les données reçues indiquant le fabriquant de l'émetteur associé et exécute un processus correspondant au fabriquant déterminé de l'émetteur.

4. Procédé de traitement selon la revendication 3, **caractérisé en ce que** le récepteur détermine le type de l'émetteur qui est une source de données reçues sur la base de données comprises dans les données reçues indiquant le type de l'émetteur utilisé et exécute un processus correspondant au type déterminé de l'émetteur.

5. Procédé de traitement selon la revendication 3, **caractérisé en ce que** le récepteur détermine le type de l'émetteur qui est une source de données reçues sur la base de données indiquant lesquelles des données utilisées pour commander les dispositifs du véhicule ou des données indiquant une condition d'un pneu sont données et exécute un processus correspondant au type déterminé de l'émetteur.
